# EUROPÄISCHE PATENTSCHRIFT

(11) **EP 1 361 371 B1**
(45) Veröffentlichungstag und Bekanntmachung des Hinweises auf die Patenterteilung: **28.06.2006**
(21) Anmeldenummer: 03009727.3
(22) Anmeldetag: 02.05.2003
(51) Int. Cl.: F16C 13/00

(54) **Walze**
Roll
Rouleau

(30) Priorität: 08.05.2002 DE 10220834
(43) Veröffentlichungstag der Anmeldung: 12.11.2003
(73) Patentinhaber: Eduard Küsters Maschinenfabrik GmbH & Co. KG, 47805 Krefeld (DE)
(72) Erfinder: Brendel, Bernhard, Dr., 47929 Grefrath (DE); Svenka, Peter, Dr., 47929 Grefrath (DE)
(74) Vertreter: Sparing Röhl Henseler Patentanwälte European Patent Attorneys

(56) Entgegenhaltungen:
- DE-A- 10 026 939
- GB-A- 2 029 932
- US-A- 6 073 548
- US-B1- 6 346 066

## Beschreibung

Die Erfindung betrifft eine Walze mit einem Träger und einem gegenüber diesem drehbaren Walzenmantel nach dem Oberbegriff des Patentanspruchs 1.

Eine derartige Walze ist beispielsweise aus der DE 199 47 398 C2 bekannt, die eine hydrostatische Randlagerung aufweist. Die Schwierigkeit der Randlagerung des Walzenmantels auf einer drehfesten Achse besteht darin, daß eine einwandfreie Lagerung des Walzenmantels auch unter Lastbedingungen gewährleistet werden muß. Unter Lastbedingungen wird nämlich eine Durchbiegung der Walzenachse zum Walzenmantel im Bereich des Randlagers hervorgerufen. Aufgrund dieser Achsdurchbiegung kommt es zu einer axialen Verschiebung und Kippung (Neigung) des Lagerringes des Randlagers und der in Ihm eingesenkten Hydrozylinder, die die Kolben der bekannten Stützelemente umfassen. Dadurch verändert sich nicht nur die axiale Stützlage, sondern es vergrößert sich auch der Stützabstand zwischen dem Lagerring bzw. der Oberfläche der Stützelemente und der Innenoberfläche des Walzenmantels, so daß ein Nachstellen des hydrostatischen Stützelementes notwendig ist. Der Ausgleich erfolgt gemäß DE 199 47 398 C2 durch das Herausfahren eines kolbenartigen Stützelementes, wodurch die Abstandsveränderung überwunden wird. Aufgrund der durch die Betriebsbelastung der Walze verursachten Durchbiegung der Achse kommt es zu einer erzwungenen Schrägstellung des die Hydrozylinder aufnehmenden Lagerringes, und dadurch zur Schrägstellung der Stützkolben relativ zu ihren Hydrozylindern. Dies führt zu der notwendigen Überbrückung des vergrößerten Abstandes und dadurch zur Verlängerung der Stützlängen der Stützkolben. Die Labilität der Stützposition wird hierdurch verstärkt.

Eine definierte Stützung des Walzenmantels ist dadurch belastet. Jedes kolbenartige Stützelement ist aufgrund seiner Konstruktion in der Stützposition statisch unbestimmt gelagert, also in der Stützposition labil. Unter der Einwirkung der Betriebslast und der Tangentialkräfte, die aufgrund der Flüssigkeitsreibung in dem Stützspalt entstehen, wird das Stützelement in der Rotationsrichtung durch ein Kippmoment belastet. Eine solche Kippung führt zum metallischen Kontakt der Dichtflächen der Stützelemente mit der Innenwand des Walzenmantels. Durch die Schrägstellung der Stützkolben leiden auch die Kolbendichtungen. Die Walze ist deshalb störanfällig und unterliegt einem erhöhten Verschleiß.

Aufgabe der Erfindung ist es daher, eine Walze nach dem Oberbegriff des Patentanspruchs 1 zu schaffen, die eine solche Lagerung des Walzenmantels in seinem Randbereich erlaubt, daß der Walzenmantel unter Lastbedingungen verschleißarm geführt und positioniert ist.

Diese Aufgabe wird durch die Merkmale des kennzeichnenden Teils des Patentanspruchs 1 gelöst.

Hierdurch wird eine Walze geschaffen, bei der die Randlagerung des Walzenmantels von einer hydrostatischen Doppellagerung gebildet wird. Der Walzenmantel wird folglich nicht mehr gestützt, sondern im Lager getragen, und ist damit statisch bestimmt. Kippungen werden ausgeschlossen. Ein solches Lagersystem ermöglicht in allen Betriebszuständen, insbesondere bei hohen Geschwindigkeiten und bei hohen thermischen Belastungen und beim Auftreten von Störkräften, die auf die Walze einwirken, einen verschleißarmen und energiesparenden Betrieb.

Durch die zweigliedrige Konstruktion der hydrostatische Doppellagerung wird eine im Betrieb auftretende Achsdurchbiegung von der Lageranordnung ausgeglichen, so daß es einer radialen Positionsanpassung des Außenlagertaschenelementes, wie dies der Stand der Technik vorsieht, nicht mehr bedarf. Durch das Lagern des Außenlagertaschenelementes auf einem inneren hydrostatischen Tragelement folgt bei einer Achsdurchbiegung der Lagerring der Walzenachse, ohne daß das Außenlagertaschenelement eine Positionsveränderung erfahren muß. Bei einer Achsdurchbiegung verschiebt sich lediglich die Innenlagerfläche gegenüber dem Außenlagertaschenelement, wobei dieses in seiner Tragposition an der Innenwand des Walzenmantels verbleibt.

Ferner wird dadurch, daß die Außen- und Innenlagerfläche radial konzentrisch zur Mantelumfangslinie verlaufen, gewährleistet, daß das Außenlagertaschenelement bei allen Betriebszuständen und betriebsbedingten Verformungen der Walzenachse einen konstanten Abstand zu dem Walzenmantel-Innenumfang behält. Damit wird sichergestellt, daß keine achsdurchbiegungsbedingte Änderung eines Lagerabstandes im Lager erfolgen muß. Das äußere hydrostatische Tragelement ist auf der sphärischen Innenlagerfläche des inneren hydrostatischen Tragelementes gelagert. Damit wird der Abstand des ersten hydrostatischen Tragelementes zur Walzenmantel-Innenwand in allen Betriebszuständen unverrückbar konstant und konzentrisch gehalten. Die Umfangskräfte, die bei der Rotation des Walzenmantels durch die Spaltströmung und durch das Umgebungsmedium in dem Zwischenraum von Walzenachse und Innenwand des Walzenmantels entstehen, haben keinen Einfluß auf die statisch bestimmte Position der hydrostatischen Lagereinrichtung. Das innere hydrostatische Tragelement ermöglicht bei den betriebsbedingten Verformungen der Walzenachse ein reibungsfreies Gleiten des äußeren hydrostatischen Tragelementes auf einer sphärischen Innenlagerfläche. Die Spaltströmung kann dadurch z.B. bei minimaler Spalthöhe geregelt werden.

Ein solche hydrostatische Doppellagerung mit kugeliger Innenlagerfläche verbessert die Funktionstüchtigkeit, die Betriebssicherheit und den Gebrauchsschutz der Lagerung wesentlich. Ferner wird sichergestellt, daß in allen Betriebszuständen mit oft rasch wechselnden Lasten die Spaltschmierung gewährleistet ist. Die tatsächliche Beibehaltung gleicher Spalthöhen über den ganzen Umfang der Dichtfläche eines Außenlagertaschenelementes wird durch die zweistufige hydrostatische Lagereinrichtung gewährleistet.

Durch eine Sicherung des unveränderten Abstandes zwischen dem Lagerring, der die Lageranordnung trägt, und dem Walzenmantel wird eine genaue, bisher nicht erreichte Qualität der Lagerung des Walzenmantels erreicht. Eine einwandfreie Dämpfung der Schwingungs- und Vibrationserscheinungen ist das unmittelbare Ergebnis, denn mit der geregelten Spaltströmung wird eine wirksame Dämpfung sämtlicher betriebsbedingter Vibrationen erreicht. Die Walze ist deshalb für höchste Geschwindigkeiten und Temperaturen ausgelegt.

Die Versorgung der Außen- und Innenlagertaschenelemente kann jeweils mit einem konstanten Volumenstrom eines Hydraulikdruckmediums erfolgen. Das Innenlagertaschenelement zur geometrisch genauen Halterung und Positionierung des Außenlagertaschenelementes kann auch über einen druckgeregelten Strom an Hydraulikdruckmedium versorgt werden.

Die Regelung der radialen Lagerung ist einfach. Es kann ein geschlossener Regelkreis verwendet werden, in dem die beiden Schmierspalte der hydrostatischen Tragelemente in einem Gleichgewichtszustand beharren. Nur eine Störungsüberwachung kann dann ausreichend sein.

Die erfindungsgemäße radiale Lagerung ist zudem trotz ihrer großen Vorteile überraschend einfach in ihrem Konstruktionsaufbau und verlangt keine neuen Lösungen für im Lagerbereich im übrigen vorzusehende Bauteile. So kann für eine störungsarme und wirksame Axiallagerung des Walzenmantels auf bekannte Lösungen zurückgegriffen werden. Zusammen mit der erfindungsgemäßen radialen Lagerung ist auch eine geregelte Axialverschiebung des Walzenmantels auf seiner drehfesten Achse möglich. Durch eine geregelte, z. B. periodische, oder eine streckenweise Verschiebung des Walzenmantels kann eine Beschädigung der Walzenmantel-Oberfläche durch die Ränder der getragenen Warenbahn, hier insbesondere einer getragenen Papierbahn, verhindert oder zumindest gemildert werden.

Die Walze kann für verschiedene Zwecke eingesetzt werden. So kann die Walze als Durchbiegeeinstellwalze eine Endwalze eines Walzenstapel bilden, und zwar unabhängig davon, ob die Endwalze beheizt ist oder nicht und als harte oder weiche Walze ausgebildet ist. Die Walze kann ferner eine, mehrere oder alle Mittelwalze(n) eines Walzenstapels bilden, und zwar wieder unabhängig davon, ob die Walze beheizt ist oder nicht und als harte oder weiche Walze ausgebildet ist. Eine neue und technisch wirksamere Bauweise von Walzen wird hierdurch eröffnet.

Eine besonders vorteilhafte Ausgestaltung der Führung des Lagerringes und seiner Positionierung relativ zur Walzenachse wird durch die Verwendung von druckbeaufschlagbaren Stell- und Führungskolben erreicht. Durch eine Integration der Regelung solcher Stell- und Führungskolben in eine Regelung der Streckenlasten bzw. Druckspannungen im Nip kann die Betriebsweise eines Kalanders optimiert werden.

Weitere Ausgestaltungen und Vorteile der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.
Fig. 1 zeigt schematisch einen Teillängsschnitt einer Walze gemäß einem ersten Ausführungsbeispiel,
Fig. 2 zeigt schematisch einen Teilquerschnitt der Walze gemäß Fig. 1,
Fig. 3 zeigt schematisch eine Draufsicht einer Lageranordnung der Walze gemäß Fig. 1,
Fig. 4 zeigt schematisch einen Ausschnitt des Teillängsschnittes einer Walze gemäß einem zweiten Ausführungsbeispiel, wobei die Walzenachse eine Achsverbiegung zeigt,
Fig. 5 zeigt schematisch einen Teilquerschnitt einer Walze gemäß dem zweiten Ausführungsbeispiel,
Fig. 6 zeigt schematisch eine Draufsicht einer Lageranordnung der Walze gemäß Fig. 5,
Fig. 7 zeigt schematisch einen Teilquerschnitt einer Walze gemäß einem dritten Ausführungsbeispiels der Erfindung,
Fig. 8 zeigt schematisch eine Draufsicht einer Lageranordnung der Walze gemäß Fig. 7,
Fig. 9 zeigt schematisch einen Teilquerschnitt einer Walze gemäß einem vierten Ausführungsbeispiel,
Fig. 10 zeigt schematisch einen Teilquerschnitt einer Walze gemäß einem fünften Ausführungsbeispiel,
Fig. 11 zeigt schematisch einen Teillängsschnitt einer Walze gemäß Fig. 10,
Fig. 12 zeigt die Walze gemäß Fig. 1 mit angeschlossenem Hydrauliksystem.

Die Erfindung betrifft eine Walze zur Bildung eines Nips in einer Vorrichtung, vorzugsweise in einem Kalander, für die Behandlung einer Warenbahn, insbesondere einer Papierbahn.

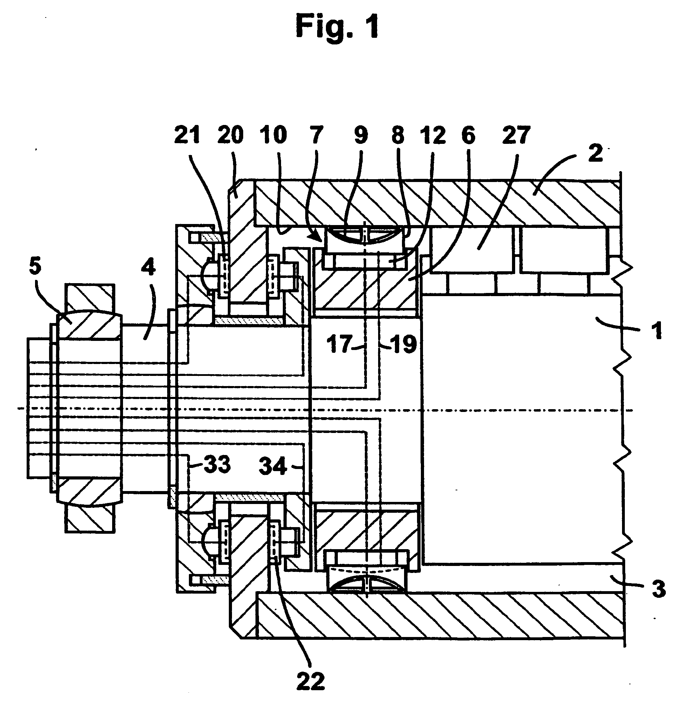

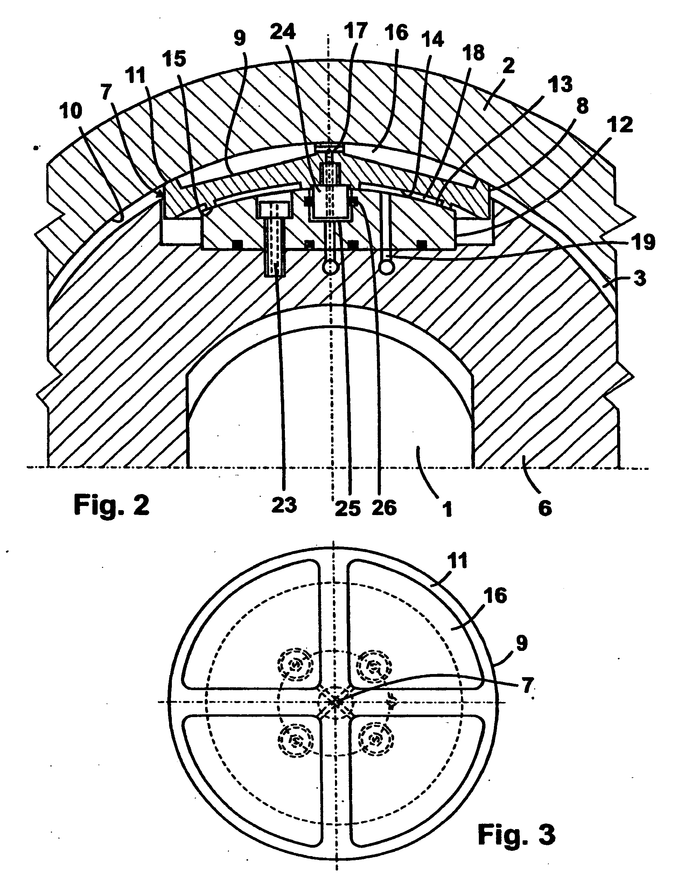

Gemäß Fig. 1 und 2 umfaßt die Walze einen Träger 1, der von einer Walzenachse gebildet wird, und einen gegenüber dem Träger 1 drehbaren Walzenmantel 2. Der Walzenmantel 2 ist hier als Walzenrohr oder Walzenschale ausgebildet, d.h. der Walzenmantel 2 umgibt einen Hohlraum 3, in dem der Träger 1 angeordnet ist. Der Träger 1 ist mit seinen Walzenenden 4 in jeweils einem Walzenendenlager 5 drehfest und schwenkbar gehalten. Der Walzenmantel 2 ist gegenüber dem Träger 1 drehbar, wobei der Träger 1 im Bereich eines jeden Endes des Walzenmantels 2 einen Lagerring 6 für eine Lageranordnung 7 zum Lagern des Walzenmantels 2 aufweist. Der Lagerring 6 ist hier gegenüber dem Träger radial verschiebbar. Für eine axiale Fixierung des Walzenmantels 2 besitzt dieser mindestens an einem Ende endseitige Seitenwandungen 20, die mittels Axiallagern 21, 22 gegenüber dem Träger 1 abgestützt sind. Die Axiallager 21, 22 können schwenkbar gegenüber dem Träger 1 angeordnet sein. Hydraulikzuleitungen 33, 34 können zu den Axiallagern 21, 22 führen, um diese als hydrostatische Lager auszubilden. Die Axiallager 21, 22 können ferner für eine axiale Verschiebbarkeit des Walzenmantels 2 ausgelegt sein.

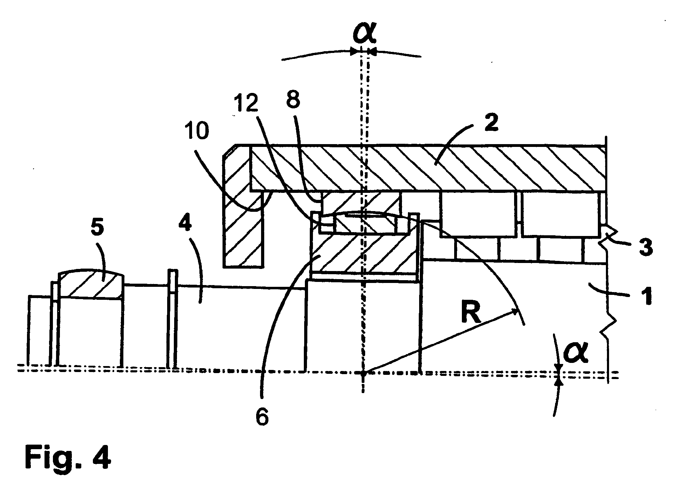

Die Lageranordnung 7 zum Lagern des Walzenmantels 2 umfaßt mindestens zwei in Umfangsrichtung verteilt angeordnete äußere hydrostatische Tragelemente 8, die jeweils ein Außenlagertaschenelement 9 mit einer zylindrischen, den zylindrischen Walzenmantel 2 auf einer Mantelinnenwand abstützenden Außenlagerfläche 11 aufweisen. Das Außenlagertaschenelement 9 weist mindestens eine, im vorliegenden Fall vier Drucktaschen 16 (vgl. Fig. 3) auf, die über eine gemeinsame Zuleitung 17, die sich in die Drucktaschen 16 verzweigt, mit einem Hydraulikdruckmedium versorgt werden kann. Durch die Beaufschlagung des Außenlagertaschenelementes 9 mit Hydraulikdruckmedium, das einen Strömungsspalt zwischen der Außenlagerfläche 11 und der Mantelinnenwand des Walzenmantels bildet, entsteht ein äußeres hydrostatisches Gleitlager.

Das Außenlagertaschenelement 9 ist dabei jeweils über ein inneres hydrostatisches Tragelement 12 auf dem Lagerring 6 angeordnet. Das innere hydrostatische Tragelement 12 besitzt eine sphärische Innenlagerfläche 13, auf der das Außenlagertaschenelement 9 über ein Innenlagertaschenelement 14 getragen wird. Das Innenlagertaschenelement 14 ist gemäß dem in Fig. 2 dargestellten ersten Ausführungsbeispiel der Walze an der dem inneren hydrostatischen Tragelement 12 zugewandten Seite des äußeren hydrostatischen Tragelementes 8 ausgebildet. Das Innenlagertaschenelement 14 weist mindestens eine Drucktasche 18 auf, die über eine Zuleitung 19 mit einem Hydraulikdruckmedium versorgt werden kann. Da das Innenlagertaschenelement 14 mit seiner mindestens einen Drucktasche 18 in das äußere hydrostatische Tragelement 8 integriert ist, wird an dem äußeren hydrostatischen Tragelement 8 eine innere Außenlager-Innenfläche 15 gebildet, die von der Innenlagerfläche 13 unter Bildung eines Dichtspaltes getragen wird. Durch die Beaufschlagung des Innenlagertaschenelementes 14 mit Hydraulikdruckmedium, das einen Strömungsspalt zwischen der Außenlager-Innenfläche 15 und der Innenlagerfläche 13 bildet, entsteht ein inneres hydrostatisches Gleitlager.

Das innere hydrostatische Tragelement 12 ist an dem Lagerring 6 befestigt, beispielsweise mittels Bolzen 23. Die dem äußeren hydrostatischen Tragelement 8 zugewandete Oberseite bildet die Innenlagerfläche 13, die sphärisch ausgebildet ist. Die sphärische Ausbildung ist dergestalt, daß die Außenlagerfläche 11 und die Innenlagerfläche 13 zur inneren Walzenmantelumfangslinie 10 konzentrisch verlaufen.

Die Zuleitung 17 für das Hydraulikdruckmedium zum Außenlagertaschenelement 9 erfolgt mittels eines Dichtzapfens 24, der in dem äußeren hydrostatischen Tragelement 8 befestigt, beispielsweise eingeschraubt, ist und mit einem anderen Ende in einer zylindrischen Einsenkung 25 des inneren hydrostatischen Tragelementes 12 über Einsatzstücke, vorzugsweise Dichtungen 26 aus einem elastischen Material, abgedichtet ist. Dadurch wird der Austritt des Hydraulikdruckmediums außerhalb der Zuleitung 17 verhindert. Die Einsatzstücke sind so bemessen, daß sie ein konzentrisch freies Verschieben des Außenlagertaschenelementes 9 des äußeren hydrostatischen Tragelementes 8 gegenüber der Innenlagerfläche 13 des inneren hydrostatischen Tragelementes 12 gewährleisten, andererseits das äußere hydrostatische Tragelement 8 gegenüber dem inneren hydrostatischen Tragelement 12 positionieren. Das Verschieben des äußeren hydrostatischen Tragelementes 8 gegenüber dem inneren hydrostatischen Tragelement 12 erfolgt auf der konzentrischen sphärischen Innenfläche 13 mit einem Radius R, Fig. 4, wobei die Verschiebung für eine beispielhaft dargestellte Achsbiegung mit dem Winkel α gilt.

Die Zuleitungen 17, 19 für die Druckflüssigkeit zum Außenlagertaschenelement 9 und Innenlagertaschenelement 14 sind jeweils mit einem Hydraulikdruckmediumreservoir in bekannter Weise verbindbar. Die Verbindung mit einem Hydraulikdruckmediumreservoir kann jeweils über eine Regelvorrichtung erfolgen, die den Druck und die Strömung des Hyraulikdruckmediums bestimmt. Bevorzugt ist, daß die Außen- und Innenlagertaschenelemente 9, 14 mit jeweils einem konstanten Volumenstrom des Hydraulikmediums beaufschlagbar sind. Das Innenlagertaschenelement 14 kann zur geometrisch genauen Halterung und Positionierung des Außenlagertaschenelementes 9 auch über einen druckgeregelten Strom mit Hydraulikdruckmedium versorgt werden.

Weiterhin kann die Walze beheizbar ausgebildet sein, wozu Hydraulikdruckmedium gleichzeitig als Heizmedium eingesetzt wird. Die Walze kann als harte Walze eingesetzt werden oder der Walzenmantel 2 einen äußeren elastischen Belag aufweisen, um eine weiche Walze zu bilden.

Die Walze kann für verschiedene Zwecke eingesetzt werden. Dargestellt in den Figuren 1 bis 3 ist eine Walze, die als Durchbiegeeinstellwalze ausgebildet ist. Dazu ist zwischen dem Träger 1 und dem Walzenmantel 2 eine hydraulische Stützelementenanordnung vorgesehen, die den Walzenmantel 2 in dem Bereich zwischen den Lagerringen 6 über hydrostatische, radial verschiebbare Stützelemente 27, die entlang mindestens eine Reihe angeordnet sind, an dem Träger 1 abstützen.

Vorzugsweise bilden drei oder vier umfanglich verteilt angeordnete äußere hydrostatische Tragelemente 8 mit zugehörigen inneren hydrostatischen Tragelementen 12 eine Lageranordnung 7.

Die Fig. 4 bis 6 zeigen ein zweites Ausführungsbeispiel einer Walze, das sich von dem zuvor beschriebenen ersten Ausführungsbeispiel dadurch unterscheidet, daß das Innenlagertaschenelement 14 mit der mindestens einen Drucktasche 18 an dem inneren hydrostatischen Tragelement 12 ausgebildet ist. Die Innenlagerfläche 13 wird von einer sphärischen Gleitfläche aus einzelnen Flächenabschnitten gebildet. Die Drucktaschen 16 des äußeren hydrostatischen Tragelementes sind zudem rechteckig ausgebildet. Im übrigen gelten die vorstehenden Ausführungen zum ersten Ausführungsbeispiel hier entsprechend.

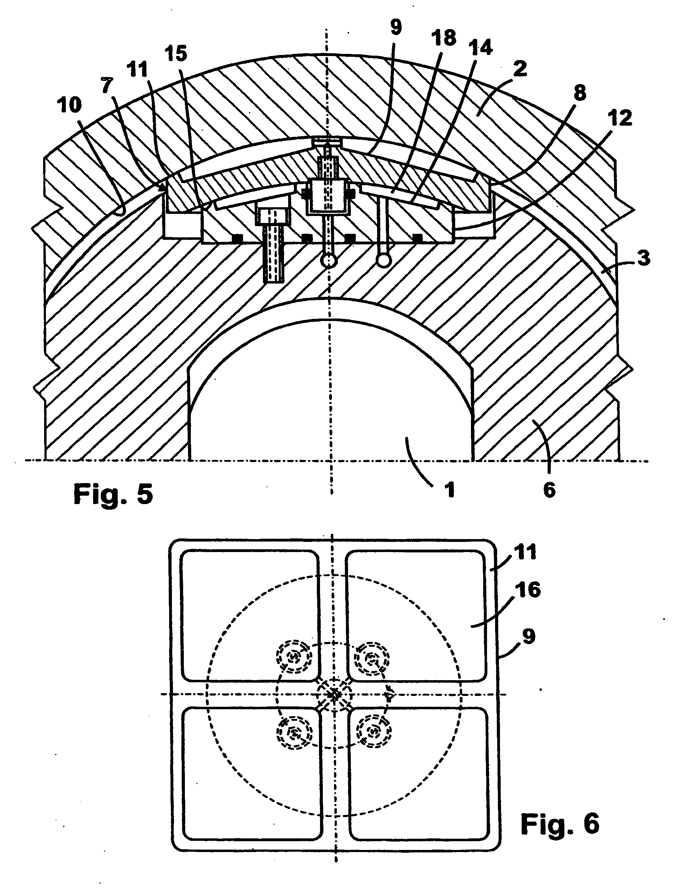

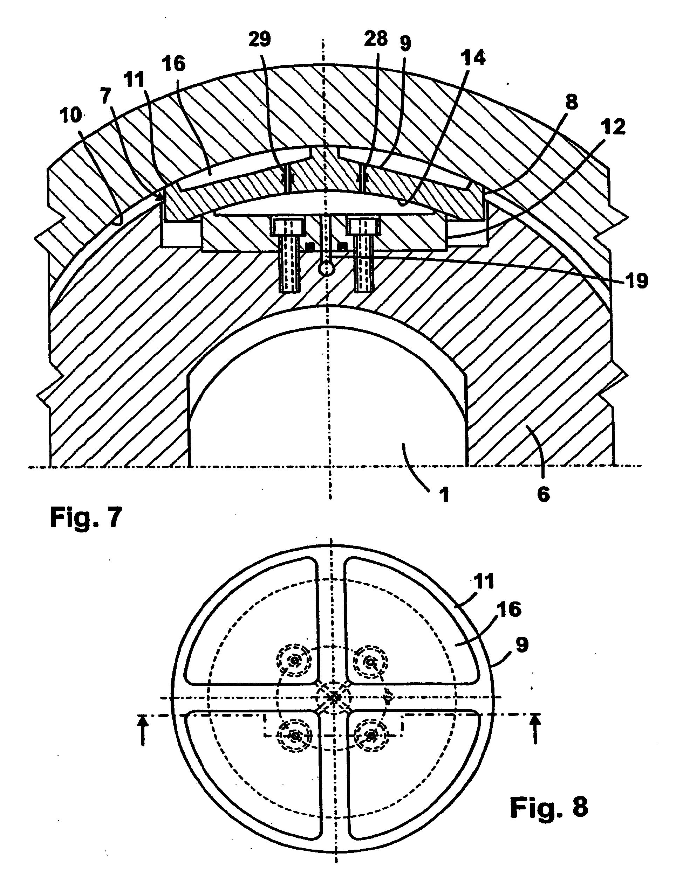

Die Fig. 7 und 8 zeigen ein drittes Ausführungsbeispiel einer Walze, das eine Lageranordnung 7 zeigt, die sich von der des zweiten Ausführungsbeispiels dadurch unterscheidet, daß das Außenlagertaschenelement 9 und das Innenlagertaschenelement 14 über Verbindungskanäle 28, 29 miteinander kommunizieren. Nur eine Zuleitung 19 für Hydraulikdruckmedium in das Innenlagertaschenelement 14 ist deshalb vorgesehen. Da eine separate Zuleitung zum Außenlagertaschenelement 9 damit entfallen kann, entfallen auch der Führungszapfen und die Führungsausnehmung gemäß Fig. 5. Durch die hydrostatische Beaufschlagung des Innenlagertaschenelementes 14 wird das äußere hydrostatische Tragelement in Axialrichtung und Radialrichtung hinreichend gefesselt an der Innen-Mantelfläche 10, so daß mechanische Positionierhilfen entfallen können.

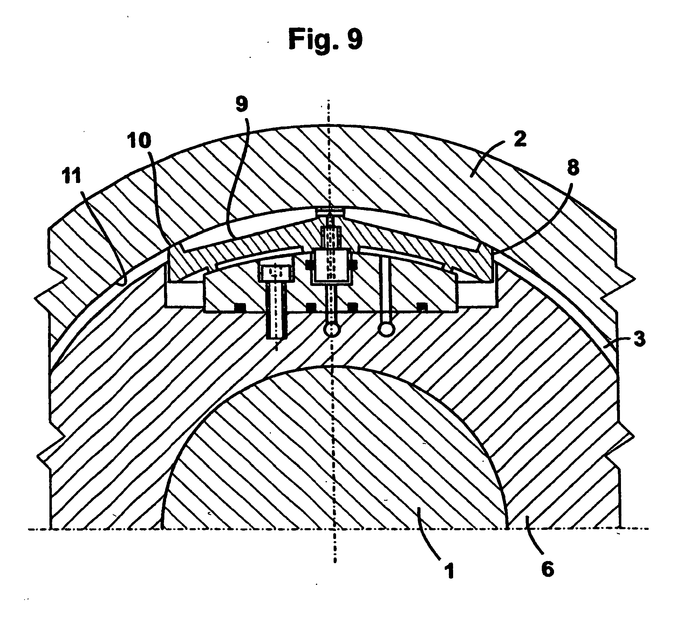

Fig. 9 zeigt ein viertes Ausführungsbeispiel einer Walze, das dem zweiten Ausführungsbeispiel entspricht bis auf eine achsenfeste Anordnung des Lagerings 6 auf dem Träger 1.

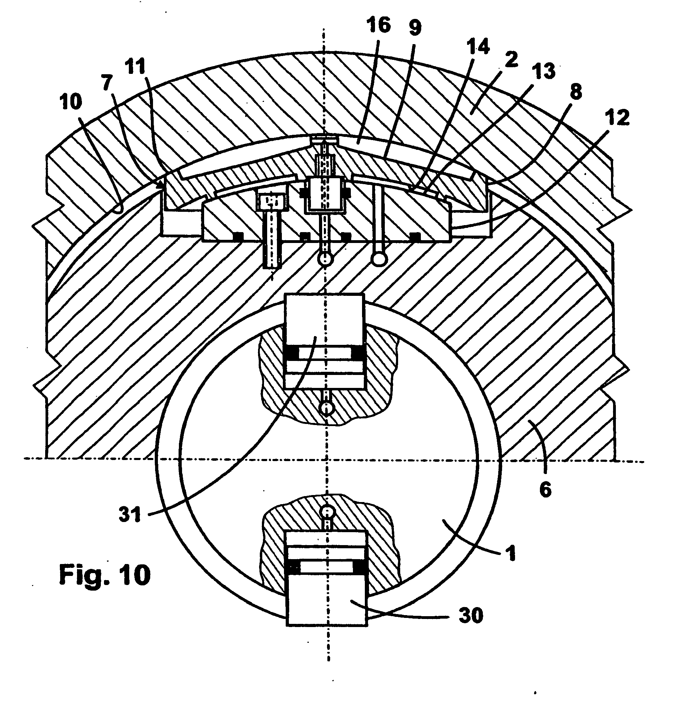

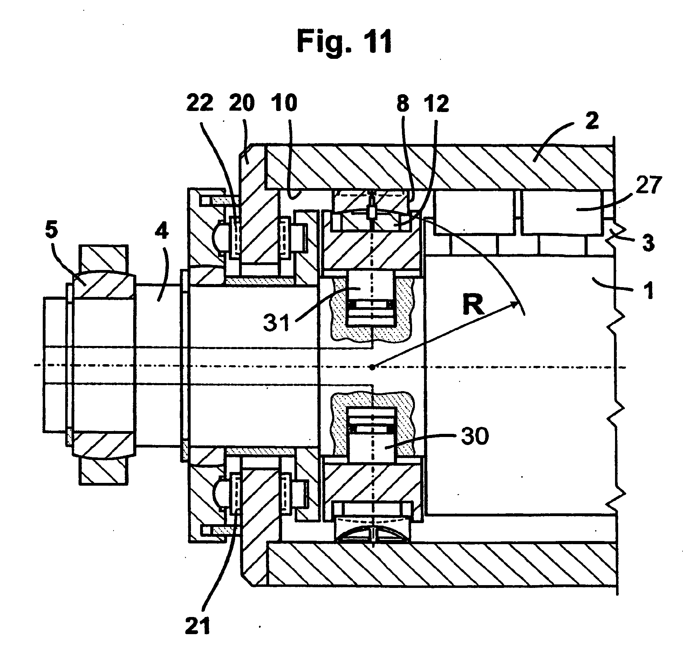

Die Fig. 10 und 11 zeigen schließlich ein fünftes Ausführungsbeispiel der Walze, das sich von dem ersten Ausführungsbeispiel dadurch unterscheidet, daß der Lagerring 6 relativ zum Träger 1 radial verschiebbar ist mittels Kolben-Zylindereinheiten 30, 31.

Gemäß einem weiteren nicht dargestellten Ausführungsbeispiel kann alternativ auch die Lageranordnung relativ zu einem achsfesten Lagerring radial verschiebbar sein.

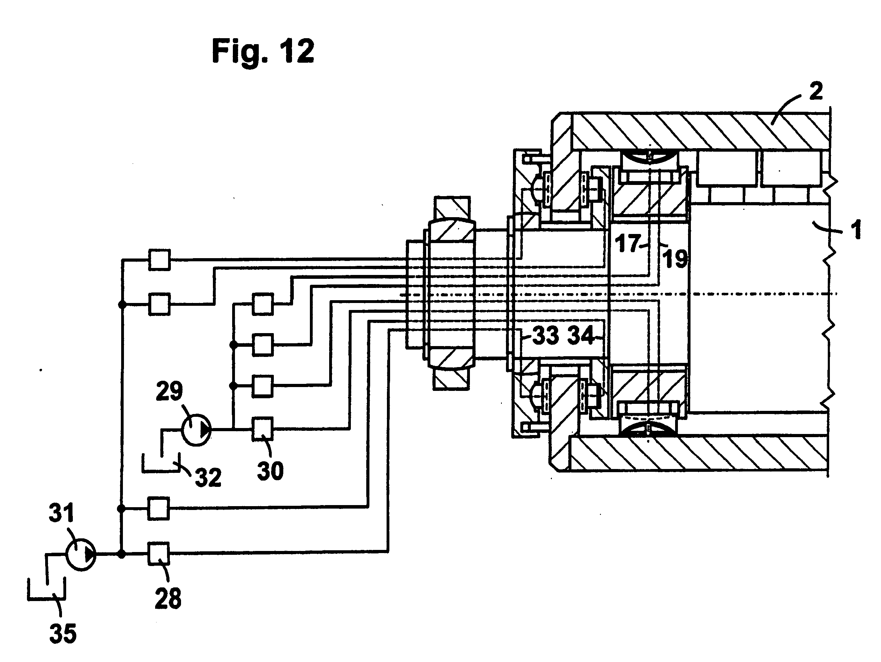

Fig. 12 zeigt die Walze gemäß dem ersten Ausführungsbeispiel mit zugeordnetem Hydrauliksystem. Es ist eine Pumpe 29 vorgesehen, die aus einem Reservoir 32 fördert. Sie fördert das Hydraulikmedium über Regler 30 zu den Versorgungsleitungen 17 und 19 des hydrostatischen Traglagerungssystems 7. Die Regler 30 sorgen dafür, daß ein Volumenstrom durch die Leitungen 17 und 19 in die Drucktaschen 16, 18 gelangen. Die Drucktaschen 16 werden bevorzugt mit immer konstantem Volumenstrom versorgt, während die Drucktaschen 18 auch mit einem druckgeregelten Volumenstrom versorgt werden können.

Eine weitere Pumpe 31, die aus einem Reservoir 35 fördert, wird mit Vorteil für die Versorgung der Axiallager 21, 22 vorgesehen, wobei der Volumenstrom des Hydraulikdruckmediums über Regler 28 zu den Zuleitungen 33, 44 der Axiallager 21, 22 gelangt. Dadurch wird für die Axiallagerung des Walzenmantels 2 gegenüber dem Träger 1 gesorgt.

## Patentansprüche

1. Walze mit einem Träger (1) und einem gegenüber diesem drehbaren Walzenmantel (2), wobei der Träger (1) an jedem Ende des Walzenmantels (2) einen Lagerring (6) für eine Lageranordnung (7) zum Lagern des Walzenmantels (2) aufweist, die von mindestens zwei in Umfangsrichtung verteilt angeordneten äußeren hydrostatischen Tragelementen (8) gebildet ist, wobei die äußeren hydrostatischen Tragelemente (8) jeweils ein Außenlagertaschenelement (9) mit einer zylindrischen, den zylindrischen Walzenmantel (2) auf einer inneren Mantellinie (10) abstützenden Außenlagerfläche (11) aufweisen, das Außenlagertaschenelement (9) jeweils über ein inneres hydrostatisches Tragelement (12) auf dem Lagerring (6) angeordnet ist, **dadurch gekennzeichnet, daß** das innere hydrostatische Tragelement (12) eine sphärische, das Außenlagertaschenelement (9) über ein Innenlagertaschenelement (14) tragende Innenlagerfläche (13) aufweist, wobei die Außenlager- und Innenlagerflächen (11, 13) zur inneren Mantelumfangslinie (10) konzentrisch verlaufen.

2. Walze nach Anspruch 1, **dadurch gekennzeichnet, daß** der Lagerring (6) relativ zum Träger (1) radial verschiebbar ist.

3. Walze nach Anspruch 1, **dadurch gekennzeichnet, daß** die Lageranordnung (7) relativ zum Lagerring (6) radial verschiebbar ist.

4. Walze nach einem der Ansprüche 1 bis 3, **dadurch gekennzeichnet, daß** das äußere hydrostatische Tragelement (8) an einer inneren, dem inneren Tragelement (12) zugewandten Außenlager-Innenfläche (15) das Innenlagertaschenelement (14) aufnimmt.

5. Walze nach einem der Ansprüche 1 bis 3, **dadurch gekennzeichnet, daß** das innere hydrostatische Tragelement (12) an der dem äußeren Tragelement (8) zugewandten Innenlagerfläche (13) das Innenlagertaschenelement (14) aufnimmt.

6. Walze nach einem der Ansprüche 1 bis 5, **dadurch gekennzeichnet, daß** die Innenlagerfläche (13) von einer sphärischen Gleitfläche mit einzelnen Flächenabschnitten gebildet ist.

7. Walze nach einem der Ansprüche 1 bis 6, **dadurch gekennzeichnet, daß** die inneren und äußeren Tragelemente (8, 12) an jeweils eine Zuleitung (17, 19) für ein Hydraulikdruckmedium zur Speisung der Lagertaschenelemente (9, 14) angeschlossen sind.

8. Walze nach Anspruch 7, **dadurch gekennzeichnet, daß** die Zuleitungen (17, 19) für die Druckflüssigkeit zum Außenlagertaschenelement (9) und Innenlagertaschenelement (14) jeweils mit einer Regelvorrichtung verbunden sind, die den Druck und die Strömung des Hydraulikdruckmediums bestimmt.

9. Walze nach Anspruch 7 oder 8, **dadurch gekennzeichnet, daß** die Außen- und Innenlagertaschenelemente (9, 14) mit jeweils einem konstanten Volumenstrom eines Hydraulikdruckmediums beaufschlagbar sind.

10. Walze nach einem der Ansprüche 1 bis 9, **dadurch gekennzeichnet, daß** mindestens ein Ende des Walzenmantels (2) über Axiallager (21, 22) abgestützt ist.

11. Walze nach Anspruch 10, **dadurch gekennzeichnet, daß** die Axiallager (21, 22) schwenkbar gegenüber dem Träger (1) angeordnet sind.

12. Walze nach einem der Ansprüche 1 bis 11, **dadurch gekennzeichnet, daß** zwischen Träger (1) und Walzenmantel (2) eine hydraulische Stützelementanordnung angeordnet ist, die den Walzenmantel (2) zwischen den Lagerringen über hydrostatische, radial verschiebbare Stützelemente (27), die entlang mindestens einer Reihe angeordnet sind, an dem Träger (1) abstützen.

13. Walze nach einem der Ansprüche 1 bis 12, **dadurch gekennzeichnet, daß** ein Hydraulikdruckmedium als Heizmedium einspeisbar ist.

14. Walze nach einem der Ansprüche 1 bis 13, **dadurch gekennzeichnet, daß** der Walzenmantel (2) einen äußeren elastischen Belag aufweist.

15. Walze nach Anspruch 9 oder 10, **dadurch gekennzeichnet, daß** die Axiallager (21, 22) für eine axiale Verschiebbarkeit des Walzenmantels ausgelegt sind.

## Claims

1. Roll comprising a carrier (1) and a roll shell (2) rotatable relative to said carrier (1), the carrier (1), at each end of the roll shell (2), having a bearing ring (6) for a bearing arrangement (7) for mounting the roll shell (2), this bearing arrangement (7) being formed by at least two outer hydrostatic carrying elements (8) arranged in a distributed manner in the circumferential direction, the outer hydrostatic carrying elements (8) each having an outer-bearing pocket element (9) with a cylindrical outer-bearing surface (11) supporting the cylindrical roll shell (2) on an inner shell line (10), the outer-bearing pocket element (9) in each case being arranged on the bearing ring (6) via an inner hydrostatic carrying element (12), **characterized in that** inner hydrostatic carrying element (12) has a spherical inner-bearing surface (13) carrying the outer-bearing pocket element (9) via an inner-bearing pocket element (14), the outer- and inner-bearing surfaces (11, 13) running concentrically to the inner shell circumferential line (10).

2. Roll according to claim 1, **characterized in that** the bearing ring (6) is radially displaceable relative to the carrier (1).

3. Roll according to claim 1, **characterized in that** the bearing arrangement (7) is radially displaceable relative to the bearing ring (6).

4. Roll according to one of claims 1 to 3, **characterized in that** the outer hydrostatic carrying element (8) accommodates the inner-bearing pocket element (14) on an inner outer-bearing inner surface (15) facing the inner carrying element (12).

5. Roll according to one of claims 1 to 3, **characterized in that** the inner hydrostatic carrying element (12) accommodates the inner-bearing pocket element (14) on the inner-bearing surface (13) facing the outer carrying element (8).

6. Roll according to one of claims 1 to 5, **characterized in that** the inner-bearing surface (13) is formed by a spherical sliding surface with individual surface sections.

7. Roll according to one of claims 1 to 6, **characterized in that** the inner and outer carrying elements (8, 12) are connected to a respective feed line (17, 19) for a hydraulic pressure medium for feeding the bearing pocket elements (9, 14).

8. Roll according to claim 7, **characterized in that** the feed lines (17, 19) for the pressure fluid to the outer-bearing pocket element (9) and inner-bearing pocket element (14) are in each case connected to a control device which determines the pressure and the flow of the hydraulic pressure medium.

9. Roll according to claim 7 or 8, **characterized in that** a constant volumetric flow of a hydraulic pressure medium can be admitted to the respective outer- and inner-bearing pocket elements (9, 14).

10. Roll according to one of claims 1 to 9, **characterized in that** at least one end of the roll shell (2) is supported via axial bearings (21, 22).

11. Roll according to claim 10, **characterized in that** the axial bearings (21, 22) are arranged so as to be pivotable relative to the carrier (1).

12. Roll according to one of claims 1 to 11, **characterized in that** a hydraulic supporting-element arrangement is arranged between carrier (1) and roll shell (2), this supporting-element arrangement supporting the roll shell (2) on the carrier (1) between the bearing rings via hydrostatic, radially displaceable supporting elements (27) which are arranged along at least one row.

13. Roll according to one of claims 1 to 12, **characterized in that** a hydraulic pressure medium can be fed in as heating medium.

14. Roll according to one of claims 1 to 13, **characterized in that** the roll shell (2) has an outer resilient coating.

15. Roll according to claim 9 or 10, **characterized in that** the axial bearings (21, 22) are designed for axial displaceability of the roll shell.

## Revendications

1. Rouleau avec un support (1) et une enveloppe du rouleau (2) montée rotative par rapport au support, pour lequel le support (1) présente à chaque extrémité de l'enveloppe du rouleau (2) une bague de roulement (6) pour une disposition à paliers (7) de l'enveloppe du rouleau (2), qui est formée d'au moins deux éléments supports (8) hydrostatiques extérieurs répartis en circonférence, pour lequel les éléments supports (8) hydrostatiques extérieurs présentent chacun un élément en forme de poche de palier extérieur (9) avec une surface cylindrique (11) de palier extérieur supportant l'enveloppe cylindrique du rouleau (2) sur une ligne intérieure (10) de l'enveloppe, chaque élément en forme de poche de palier extérieur (9) étant disposé sur la bague de roulement (6) au-dessus d'un élément support (12) hydrostatique intérieur, **caractérisé en ce que** l'élément support (12) hydrostatique intérieur présente une surface sphérique (13) de palier intérieur portant l'élément en forme de poche de palier extérieur (9) au-dessus d'un élément en forme de poche de palier intérieur (14), pour lequel les surfaces de palier intérieur et extérieur (11, 13) s'étendent de manière concentrique par rapport à la ligne intérieure (10) de circonférence de l'enveloppe.

2. Rouleau selon la revendication 1, **caractérisé en ce que** la bague de roulement (6) est déplaçable radialement par rapport au support (1).

3. Rouleau selon la revendication 1, **caractérisé en ce que** la disposition à paliers (7) est déplaçable radialement par rapport à la bague de roulement (6).

4. Rouleau selon l'une des revendications 1 à 3, **caractérisé en ce que** l'élément support (8) hydrostatique extérieur contient l'élément en forme de poche de palier intérieur (14) à une surface intérieure (15) du palier extérieur tournée vers l'élément support intérieur (12).

5. Rouleau selon l'une des revendications 1 à 3, **caractérisé en ce que** l'élément support (12) hydrostatique intérieur contient l'élément en forme de poche de palier intérieur (14) à la surface de palier intérieur (13) tournée vers l'élément support extérieur (8).

6. Rouleau selon l'une des revendications 1 à 5, **caractérisé en ce que** la surface de palier intérieur (13) est formée d'une surface de frottement sphérique avec des sections de surfaces uniques.

7. Rouleau selon l'une des revendications 1 à 6, **caractérisé en ce que** les éléments supports intérieur et extérieur (8, 12) sont raccordés à une conduite d'alimentation (17, 19) respective pour un moyen de pression hydraulique d'alimentation de l'élément en forme de poche de palier (9, 14).

8. Rouleau selon la revendication 7, **caractérisé en ce que** les conduites d'alimentation (17, 19) pour le fluide sous pression sont reliées à l'élément en forme de poche de palier extérieur (9) et à l'élément en forme de poche de palier intérieur (14) respectivement avec un dispositif régulateur, qui détermine la pression et l'écoulement du moyen de pression hydraulique.

9. Rouleau selon l'une des revendications 7 et 8, **caractérisé en ce que** les éléments en forme de poche de paliers extérieur et intérieur (9, 14) sont susceptibles d'être remplis respectivement avec un débit volumique constant d'un moyen de pression hydraulique.

10. Rouleau selon l'une des revendications 1 à 9, **caractérisé en ce qu'**au moins une extrémité de l'enveloppe du rouleau (2) est supportée par des paliers axiaux (21, 22).

11. Rouleau selon la revendication 10, **caractérisé en ce que** les paliers axiaux (21, 22) sont agencés pivotant par rapport au support (1).

12. Rouleau selon l'une des revendications 1 à 11, **caractérisé en ce qu'**entre le support (1) et l'enveloppe du rouleau (2) une disposition à éléments de soutien hydraulique est agencée, qui supporte l'enveloppe du rouleau (2) au support (1) entre les bagues de roulement sur des éléments de soutien (27) hydrostatiques déplaçables radialement, qui sont agencés au moins le long d'une rangée.

13. Rouleau selon l'une des revendications 1 à 12, **caractérisé en ce qu'**un moyen de pression hydraulique est susceptible d'être injecté en tant que moyen de chauffage.

14. Rouleau selon l'une des revendications 1 à 13, **caractérisé en ce que** l'enveloppe du rouleau (2) présente un revêtement élastique extérieur.

15. Rouleau selon l'une des revendications 9 et 10, **caractérisé en ce que** les paliers axiaux (21, 22) sont dimensionnés pour un débattement axial de l'enveloppe du rouleau.
